Europäisches Patentamt

European Patent Office

Office européen des brevets

(11) Publication number: **0 221 618**
**A1**

## (12) EUROPEAN PATENT APPLICATION

(21) Application number: 86201932.0

(22) Date of filing: 05.11.86

(51) Int. Cl.⁴: **F25B 49/00** , G05D 23/19

(30) Priority: 08.11.85 NL 8503077

(43) Date of publication of application:
**13.05.87 Bulletin 87/20**

(84) Designated Contracting States:
AT BE CH DE ES FR GB GR IT LI LU NL SE

(71) Applicant: GRASSO'S KONINKLIJKE
MACHINEFABRIEKEN N.V.
P.O. Box 275
NL-5201 AG 's-Hertogenbosch(NL)

(72) Inventor: van Mol, Franciscus Lambertus
Hubertus
Papiermaker 55
NL-5283 ZR Boxtel(NL)

(74) Representative: van der Beek, George Frans
et al
Nederlandsch Octrooibureau Johan de
Wittlaan 15 P.O. Box 29720
NL-2502 LS 's-Gravenhage(NL)

(54) Refrigeration plant.

(57) Refrigeration plant intended for maintaining the temperature in one or more rooms comprising at least one or more compressors, the outputs of which are connected to one or more condensers whose outputs are connected to one or more coolers which are connected in their turn to the inputs of the said compressors. A control circuit controls all the components such that the temperature in the said room or rooms is maintained within predetermined limits. Said control circuit is provided with a number of local stations, each as signed to a group of components of the plant, in order to control said group on the basis of the operating points applying to said group, which local stations receive status data from sensors in the plant and deliver control signals to switching means with which the operation of the components in the associated group of components can be controlled. A central station which is in contact via a bus line with each of the local stations, via which bus line status data are transmitted from the local stations to the central station and operating point change instructions are transmitted from the central station to each of the local stations, which operating point change instructions are generated in the central station by pro cessing the status data received in an algorithm which strives for a state with minimum energy consumption for the whole refrigeration plant.

fig-2

## Refrigeration plant

The invention relates to a refrigeration plant intended for maintaining the temperature in one or more rooms comprising at least one or more compressors, the outputs of which are connected to one or more condensers whose outputs are connected to one or more coolers which are connected in their turn to the inputs of the said compressors, and also optional additional energy-consuming components (for example, pumps, fans), and provided with a circuit for controlling all the components in a manner such that the temperature in the said room or rooms is maintained within predetermined limits.

Such a refrigeration plant is known in its generality. In particular, in the case of fairly large refrigeration plants intended for regulating the temperature in warehouses, large-scale cold rooms and refrigerator rooms, ships equipped for transporting goods which have to be kept at a certain temperature etc., such a plant can be provided with several compressors, condensers and coolers, while more generally a number of pumps, fans, expansion elements, valves and separators is present.

Hitherto it has been usual to arrange for a complete plant of this type to be controlled by a control circuit which is disposed in a central position and specially designed for the purpose and which is generally still constructed using relay techniques.

A first disadvantage of such a known arrangement is the fact that a separate, generally multicore cable has to be laid to each of the components, to be controlled, of the complete installation, which cable must in general be suitable for considerable current strengths and voltages. This has the result that in the rooms in which such a plant is used, a complex cabling is present which is expensive to install and maintain.

A further disadvantage is the construction of the control circuit as a control circuit specially developed for a particular refrigeration plant. Not only is the design and implementation of such a circuit a time-consuming matter which requires much knowledge and experience of the designer, but, in addition, such a "special-purpose" circuit has little flexibility. It is almost impossible to change the arrangement of the refrigeration plant or to alter the processes within the refrigeration plant without a radical, time-consuming and expensive modification of the control circuit. In addition, for maintenance activities, tracing possible faults and the like it is necessary for the personnel concerned to have a more or less intimate knowledge of said special circuit, which implies, inter alia, that, on the one hand, well trained personnel must be available while, on the other hand, a comprehensive documentation specially written for the plant must be available with the plant.

In designing such a known circuit the starting point is generally the so-called "worst-case" situation, ie. the situation in which the temperature in the room or rooms has to be maintained within the desired limit values even under the most extreme conditions. That means, however, that under less extreme conditions the plant as a whole, seen relatively, will have too high an energy consumption. Referring to the above, it will, however, in general not be possible, or will be very troublesome, to readjust the complete plant to the conditions currently prevailing.

The object of the invention is therefore to construct the refrigeration plant in a manner such that at least some of the above disadvantages are eliminated or at least reduced to a considerable extent.

This object is fulfilled in a refrigeration plant of the type mentioned in the introduction in that the control circuit is provided with a number of local stations, each assigned to a group of components of the plant, in order to control said group on the basis of the operating points applying to said group, which local stations receive status data from sensors in the plant and deliver control signals to switching means with which the operation of the components in the associated group of components can be controlled, and a central station which is in contact via a bus line with each of the local stations, via which bus line status data are transmitted from the local stations to the central station and operating point change instructions are transmitted from the central station to each of the local stations, which operating point change instructions are generated in the central station by processing the status data received in an algorithm which strives for a state with minimum energy consumption for the whole refrigeration plant.

Such an embodiment of a refrigeration plant achieves the result that the cabling can in fact be reduced to a single power line to which the various components are attached via branching points and by means of which energy is delivered to the various components, and also a single bus line over which the communication takes place between the central station and the local stations.

It is preferable that the hardware structure of the central station and that of the local station are identical to each other. That has the advantage that the location of faults and the maintenance of the stations and the like is considerably reduced, while, in addition, the stations are completely interchangeable in terms of hardware.

It is furthermore preferable that the entire hardware structure of a station is accommodated on a single processor board. That presents the advantage of a very simple repair possibility. In the event of malfunction a repair man only has to replace a single board by a new standard processor board, after which the plant is again ready for operation.

Each local station may be provided with one or more analog input/output circuits by means of which analog signals originating from sensors in the group of components concerned are converted into digital signals, and digital control signals from the local station are converted into analog control signals.

Preferably each of the said input circuits is provided with a conditioning unit by means of which the analog signal received which, depending on the quantity measured, varies within a range related thereto, is converted into a signal which varies within a standard range. Depending on the nature of the quantity to be measured (pressure, temperature and the like), and depending on the range within which this quantity may vary, or depending on the range within which the output signal from the sensor may vary, and depending on the nature of the output signal of the sensor (current, voltage, frequency), a suitable conditioning unit can be provided in the input circuit for each sensor. This achieves the result that the input circuits can be uniformly constructed and matching to a particular sensor can be achieved by a suitable choice of conditioning unit.

Preferably, the software which is necessary in a station is stored in an interchangeable memory such as a programmable read-out memory of the EPROM type. This has the result that even with an identical hardware structure each station can fulfil certain specific functions of its own, for example, adapted to the nature of the components which have to be controlled by the station concerned.

Preferably, each of the local stations is further provided with means which make it possible to establish whether communication with the central station is possible via the bus line, which means, on detecting a status in which communication is no longer possible control, change or produce a change in, the operating points of the associated group of components in a manner such that the performances of said group of components are always adequate to be able to maintain the desired temperature in the room or rooms. This achieves the result that, if the bus line becomes defective, each station ensures that the associated group of components always functions in a manner such that the entire refrigeration plant can carry out its required function, even though under these conditions the refrigeration plant is not operated in a condition with minimum energy consumption.

The invention will be explained below in more detail on the basis of an exemplary embodiment shown in the accompanying figures.

Figure 1 shows a diagrammatic representation of a generally known refrigeration plant.

Figure 2 shows a block circuit diagram of the control circuit according to the invention.

Figure 3 shows a more detailed block circuit diagram of a local station, analog board and digital board used in the control circuit of Figure 2.

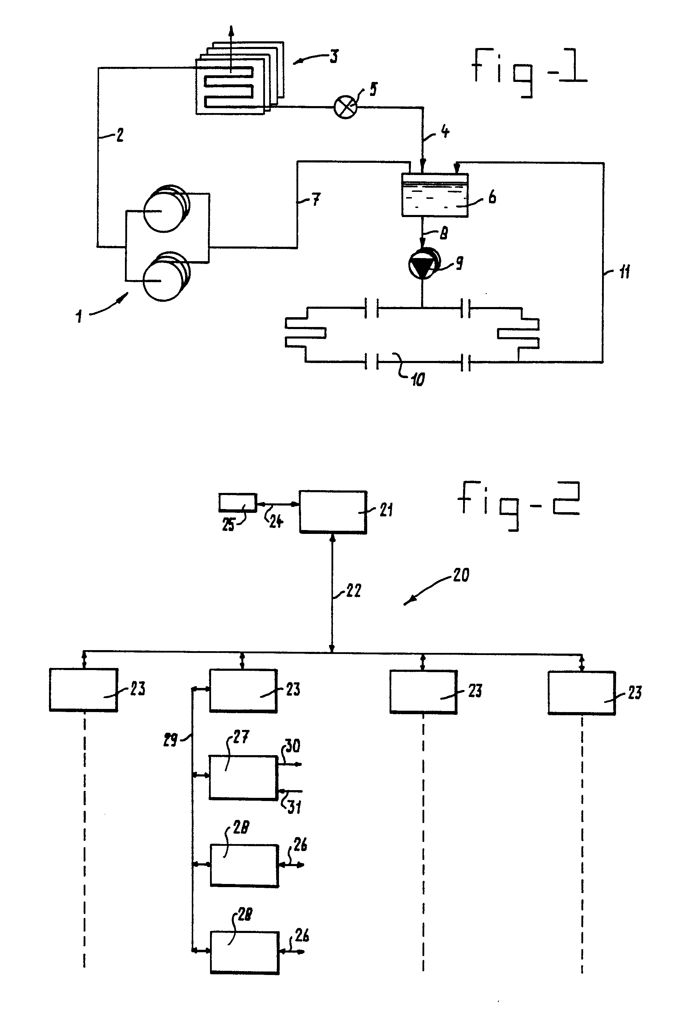

Figure 1 illustrates a generally known refrigeration plant provided with a compressor group 1 which is connected via a pipe 2 to a group of condensers 3. The condensers are in turn connected via a pipe 4, in which an expansion element 5 may optionally be incorporated, to a separator 6 from which the pipe 7 returns to the compressor group 1. From the separator 6 there runs the pipe 8, which contains one or more pumps 9, to a group of coolers 10, the outlets of which are connected via the pipe 11 to the separator 6.

The compressor group 1 provides for the maintenance of an adequate low-suction pressure of the refrigerant so that a satisfactory operation of the cooler group can be guaranteed. In the cooler group 10, the energy transfer takes place from the room to be cooled via air or another intermediate medium to the refrigerant. The condenser group 3 provides for the energy transfer from the cooling process to its environment (air/water), as a result of which a high pressure is produced which is dependent, inter alia, on the compressor capacity and the particular environmental conditions.

Because the various apparatuses are often situated at a relatively large distance from each other, this has hitherto meant that extensive cabling is necessary in a plant actuated centrally. In addition to the cabling, the requirements which are imposed on the process conditions are continuously becoming more stringent.

The invention therefore provides a control circuit with which the disadvantage of the extensive cabling can be eliminated at least to a considerable extent, while the possibility is also provided of allowing the plant to function with variable suction and compression conditions, this latter being in contrast to the present prior art in which fixed suction and compression conditions are employed.

Figure 2 provides a general block circuit diagram of the control circuit which is used for controlling the refrigeration plant which is shown in its generality in Figure 1. The control circuit 20 is provided with a central station 21 which is connected via a bus line 22 to a number of local stations which are each indicated by reference numeral 23. The central station 21 is further connected via a line 24 to a terminal 25 via which an operator can communicate with the system.

Each of the local stations 23 may be connected via a communication line 29 to an analog input/output board 27 having a number of analog outputs 30 and a number of analog inputs 31, and to one or two digital input/output boards 28 each having a number of digital inputs/outputs 26. The number of boards 27 or 28 may vary depending on the configuration of the plant and the facilities of the control circuit and is not limited to the said numbers.

The hardware for achieving the circuit in Figure 2 is accommodated on a number of boards having a uniform structure, viz. processor boards, analog boards and digital boards. Each of said boards will be described below in more detail.

The central station consists of one processor board. The task of the central station is to control all the local stations, ie. to regulate the mutual communication between various local stations and the communication between the central station and a local station. In this manner it is possible, from a central point, to actuate the inputs and outputs of all the local stations, to request alarm signals from them, to receive status data from them, to change their operating points, etc. As a result of this it becomes possible, inter alia, to operate a plant as optimally as possible. The communication between the central station and an operator may take place directly via a terminal, but is also possible via a host computer, with or without intervention of a modem connection.

Each local station functions as a regulating and control unit which can process analog and digital information and which, on the one hand, can communicate with the central station and, on the other hand, can communicate with a terminal which can be optimally connected on site.

Since the local station can function completely independently, the smallest possible system consists in fact of a local station, while the largest possible configuration in a practical embodiment consists of a central station and 256 local stations. In the embodiment realized a local station can process a maximum of 16 analog inputs, 4 analog outputs and 48 digital inputs or outputs. For this purpose the actual processor board is coupled to an analog board and a maximum of two digital input boards.

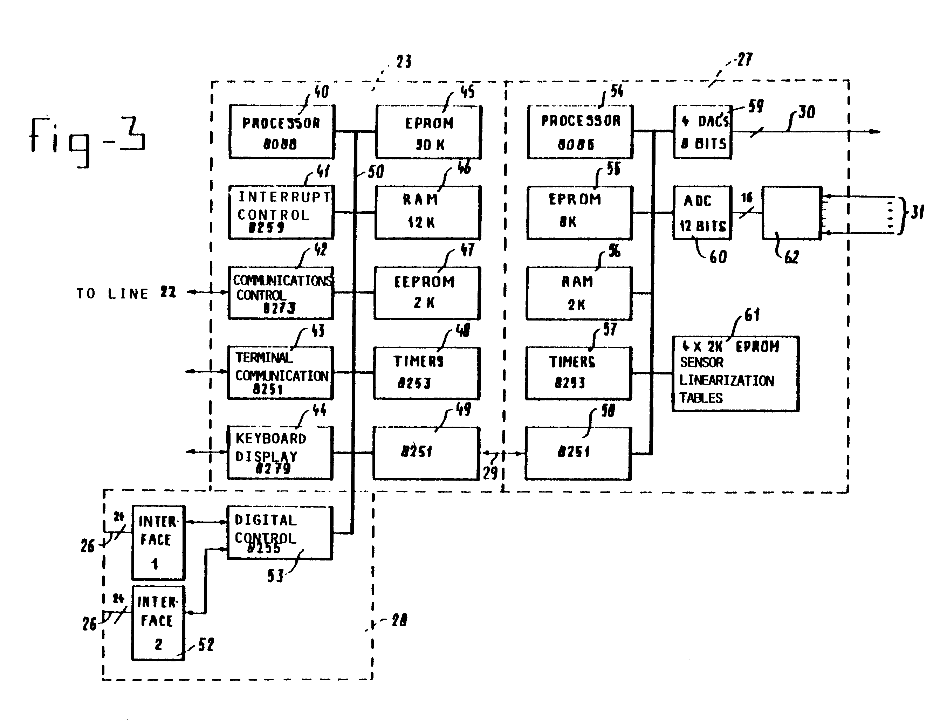

In Figure 3 a combination of a local station 23, an analog board 27 and a digital board 28 is shown in more detail.

The processor board 23 is provided with a processor 40, an interrupt control unit 41, a communication control unit 42, a terminal communication control unit 43, a keyboard/display control unit 44, two read only memories 45 and 47, a random access read/write memory 46, a clock pulse generator 48 and a communication control unit 49. All the abovementioned units are connected to each other via a bus 50. The bus 22, which leads to other local stations 23 and also to the central station 21, is connected to the communication control unit 42. An optional terminal can be connected to the local station via the terminal communication control unit 43 and an optional separate keyboard or display unit can be connected to the local station via the unit 44. The unit 49 provides for communication over the line 29 with the analog boards.

A digital board 28 is shown at the bottom left in Figure 3. This board consists of the digital input/output unit 53 which is connected to a number of interface or coupling circuits 51 and 52, each having several inputs/outputs. Whether a particular connection serves as an input or output connection is determined by the digital input/output control unit 53.

Although the general circuit diagram of Figure 2 indicates that the digital boards 28 are coupled via the bus line 29 to the local station 23, in the embodiment realized each digital board 28 contains such a small amount of hardware that in said practical embodiment of the processor board 23 all the necessary hardware for the digital boards has been integrated directly into the processor board 23 so that, as is shown in Figure 3, in said practical embodiment the digital control unit 53 is directly connected to the bus line 50.

Figure 3 also shows inside the frame 27 an analog board comprising a processor 54, a readonly memory 55, a random access read/write memory 56, clock pulse circuits 57, a communication circuit 58, a number of digital/analog converters 59 and also an analog/digital converter 60. Furthermore, a separate read-out memory 61 is present in which sensor linearization tables are stored. The communication between the local station 23 and the analog board 27 takes place over the communication line 29 under the control of the two communication control units 49 and 58.

The digital/analog converters 59 are coupled to a number of analog outputs 30, while the analog inputs 31 are connected to the analog/digital converter 60 via a number of conditioning units 62 which corresponds to the number of inputs which are in use. It is pointed out that the unit 60 does not only have an analog/digital conversion function, but also performs a multiplex function and therefore scans the analog signals at the inputs 31, after conditioning in the respective units 62, in a multiplex manner and converts them to digital signals.

In the case of a number of units in Figure 3 type numbers are indicated of integrated circuits which are known per se and which can be used for the realization of the respective units. Thus, an integrated circuit of the type 8088 can be used for the processor 40. For the interrupt control unit 41 an IC 8259 can be used, etc. It is pointed out, however, that this refers solely to examples of possible integrated circuits which can be used, while it will be clear to those skilled in the art that other existing ICs can also be used.

The central station 21 is realized in an identical manner to the local stations 23. The central station 21 thus also contains the components 40 to 50 incl. and 53, it being understood that in the central station 21 the communication unit 49 is not used. The terminal communication unit 43 in the central station provides connection to the operator terminal 25 via the line 24, while the unit 44 is used for connecting a keyboard and a display unit.

Each of the local stations 23 in Figure 2 is assigned to one of the component groups in the general diagram of Figure 1. Thus, a local station 23 is assigned to the compressor group 1, another local station is assigned to the condenser group 3, another local station is assigned to the group of pumps 9 and a further local station is assigned to the cooler group 10. Each of the said groups of components is provided with one or more sensors with which parameters relevant to the operation of the respective group of components are measured. Thus, the compressor group 1 may be provided with a number of pressure sensors, for example, both at the input and at the output of each compressor of the group. Said sensors supply an electrical signal which corresponds to the pressure at the input or output of the respective compressor and which is fed via one of the lines 31 to the associated conditioning unit 62 on the analog board 27. The conditioning unit 62 ensures that the incoming signal is converted to a signal which, depending on the value measured, varies within a predetermined standard range. Each of the compressors is further provided with switching means with which the operation of the respective compressor can be regulated. Said switching means receive control signals via one of the lines 26 from the digital board which is connected to the associated local station 23. By means of said switching means it is possible to switch each of the compressors on and off individually and, if said possibility is present, to regulate the compressors in steps or continuously (via an analog output 30).

Each cooler in the group of coolers 3 is provided with at least one temperature sensor at the output, while a temperature sensor may also be present at the input. Furthermore, each of the condensers in the group is provided with switching means with which, for example, the condenser can be switched on or switched off, while other switching means may be used for regulating fans associated with each condenser or with a group of condensers in steps or continuously. Said switching means are connected to the control lines 26 of the digital board of the associated local station so as to receive control signals via said lines 26. The temperature sensors are connected via the lines 31 to the conditioning units on the said analog board which ensure that the signals, which vary with the temperature measured, are converted into signals within a predetermined standard range.

In a similar manner the coolers in the group 10 are also provided with temperature sensors and also switching means with which the coolers can be switched on or switched off or switching means with which an influence can be exerted on fans optionally associated with the coolers with which the cold air is blown into the room to be cooled or with which valves are controlled in order to regulate the refrigerant flow. Here, too, the sensors are again connected via the lines 31 to the analog board, while control signals are supplied via the lines 26 to the said switching means.

Another local station can serve to control the pumps 9 on the basis of pressure signals supplied by one or more sensors connected to the lines 31 of the respective analog board, while control signals are supplied via the lines 26 to switching means with which the pumps are switched on, switched off or regulated in speed.

Each of the local stations ensures that, on the one hand, on the basis of the measured values received via the sensors or digital signals originating from other sources and, on the other hand, on the basis of operating values present in the local station and stored in a memory 47, the components of the associated group of components are controlled in a manner such that the respective components function at, or at least in the neighbourhood of, the respective operating values. The signals originating from the sensors are first of all converted in the conditioning unit 62 associated with the respective sensor into a signal which varies within a certain range. Thus, for example, the signal from a temperature sensor intended for measuring a temperature between, for example, -40°C and +40°C is converted into a standard signal which varies between, for example, 0 and 5 V, while the signal from a pressure sensor is also converted into a signal within said same standard range.

By means of the unit 60 the output signals from the conditioning units 62 are scanned one by one and the scanned sensor signals are digitalized in the analog/digital converter 60 to form digital status data which are stored in the memory 56. The stored status data are then corrected by the processor 54 by means of the linearization data in the memory 61. The corrected data are then transferred via the communication control units 58 and 49 to the memory 46 on the processor board 23 in order to be used as input data in calculating the control signals which have to be generated for controlling the components of the associated group of components. As further data the processor 40 has at the same time operating points at its disposal which are present in the memory 47 and originate from the central station 21 or are entered via a terminal or keyboard and via the respective communication unit 43 or 44 by an operator.

It will be clear that each of the local stations performs an independent regulation process on the basis of the operating points present in the memory 47 and on the basis of the instantaneous status data. This has the result that if the communication connection via bus 22 between the local station 23 and the central station breaks down, the regulation process continues for the respective group of components as usual. However, alteration of the operating points will then no longer take place and either the operating points last received will be used or, if the processor 40 detects that communication is no longer possible via bus 22, a change-over will be made to operating points specially preprogrammed for such cases.

In the central station 23 status data are received from each of the local stations 23 via the bus 22 and on the basis of said status data the processor 40 then calculates, in an algorithm specially designed for the purpose the operating points at which the entire refrigeration plant functions as efficiently as possible, ie. with as low an energy consumption as possible. If this means that it may be necessary to change operating points in a local station, then the respective operating point change instructions are generated by the processor 40 and transmitted to the respective local station 23 via the communication control unit 42 over the bus 22.

The application software which is necessary for controlling a refrigeration plant has to be very flexible in construction because the number and the type of the refrigeration components in a refrigeration plant are variable. Within the scope of the invention a modular design of the software has therefore been chosen by making use of a large number of standard programs. Said programs relate to individual refrigeration components and the possible forms of control thereof and are stored in a library. When constructing a new plant, use is made of those programs from said library which are necessary for controlling the respective plant. If new components are put into use, new software modules are assembled for them and added to the library.

After the software packages for a particular plant have been made up for each of the local stations and for the central station, the software is transferred to EPROMs which are then plugged into the sockets intended for them on the processor boards in the correct position.

With a control circuit according to the invention it is possible to optimize the energy consumption of the entire refrigeration plant. Because information is present in each local station relating to the processes operating in it, said information can be collected in the central station from each of the local stations. As a result of this an overview is obtained in the central station of the total refrigeration capacity required. On the basis of this the compressor capacity is then adjusted so that there is no longer any question of a fixed suction pressure as in the prior art, but of a floating suction pressure. Within certain limits, the suction pressure in the plant is additionally only dependent on the refrigeration capacity required. The software is designed in a manner such that the highest possible suction pressure at which the required refrigeration capacity can still just be supplied is aimed at.

The same applies in principle to the high pressure, but in this case the power consumption of the plant forms the criterion. Because the information relating to the power consumption is known in the local stations, the high pressure is controlled within certain limits in a manner such that the total power consumption is minimum for the capacity required at that instant.

The software is furthermore designed in a manner such that if the communication connection between the central station and the local stations is interrupted, for example by a break in the bus line or something of that type, each of the local stations can continue to function independently, optionally on the basis of the operating point last valid or on the basis of an operating point which is introduced beforehand for such cases. A fail-safe operation of the refrigeration plant is thereby achieved.

## Claims

1. Refrigeration plant intended or maintaining temperature in one or more rooms comprising at least one or more compressors, the outputs of which are connected to one or more condensers whose outputs are connected to one or more coolers which are connected in their turn to the inputs of the said compressors, and also optional additional energy-consuming components (for example, pumps, fans), and provided with a control circuit for controlling all the components in a manner such that the temperature in the said room or rooms is maintained within predetermined limits, characterized in that the control circuit is provided with a number of local stations, each assigned to a group of components of the plant, in order to control said group on the basis of the operating points applying to said group, which local stations receive status data from sensors in the plant and deliver control signals to switching means with which the operation of the components in the associated group of components can be controlled, and a central station which is in contact via a bus line with each of the local stations, via which bus line status data are transmitted from the local stations to the central station and operating point change instructions are transmitted from the central station to each of the local stations, which operating point change instructions are generated in the central station by processing the status data received in an algorithm which strives for a state with minimum energy consumption for the whole refrigeration plant.

2. Refrigeration plant according to claim 1, characterized in that the hardware structure of the central station and that of the local stations are identical to each other.

3. Refrigeration plant according to claim 2, characterized in that the entire hardware structure of a station is accommodated on a processor board.

4. Refrigeration plant according to one of the preceding claims, characterized in that each local station may be provided with one or more analog input/output circuits by means of which analog signals originating from sensors in the group of components concerned are converted into digital signals, and digital control signals from the local station are converted into analog control signals.

5. Refrigeration plant according to claim 4, characterized in that each of the said input circuits may be provided with a conditioning unit by means of which the analog signal received which, depending on the quantity measured, varies within a range related thereto, is converted into a signal which varies within a standard range.

6. Refrigeration plant according to claim 4 or 5, characterized in that in each case, for a group of input/output circuits, an analog/digital converter is present to which incoming signals within the group are fed via a multiplexer.

7. Refrigeration plant according to claim 4, 5 or 6, characterized in that each local station may be provided with a separate analog board on which the analog/digital converter and multiplexer are accommodated along with the input/output circuits, while for each input/output circuit a connecting facility is present for connecting a selected conditioning unit.

8. Refrigeration plant according to claim 7, characterized in that the structure of the analog boards is identical in each local station.

9. Refrigeration plant according to one of the preceding claims, characterized in that each local station may be provided with one or more digital input/output circuits with which incoming digital signals are conditioned as an adjustment to the conditions which apply to processing of digital signals in the local station, and digital control signals are emitted.

10. Refrigeration plant according to claim 10, characterized in that the control section of the digital input/output circuits is accommodated on each processor board.

11. Refrigeration plant according to one of the preceding claims, characterized in that the software, which is necessary in a station, is stored in an interchangeable memory.

12. Refrigeration plant according to one of the preceding claims, characterized in that each of the local stations is provided with means with which it can be established whether communication is possible with the central station via the bus line, which means, on detecting a condition in which communication is no longer possible, change, or produce a change in, the operating points of the associated group of components in a manner such that the performances of said group of components are always adequate to be able to maintain the desired temperature in the room or rooms.

13. Processor board for use in a refrigeration plant according to one of the preceding claims.

fig -1

fig -2

Fig-3

0 221 618

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 001 377 (UNITED TECHNOLOGIES CORP.)<br>* Page 1, lines 5-12; page 6, line 7 - page 9, line 8; page 11, line 22 - page 12, line 20; page 22, line 25 - page 24, line 7; page 28, lines 13-28; page 53, lines 12-24; figures 2-4 * | 1,4-7, 9,12 | F 25 B 49/00<br>G 05 D 23/19 |
| A |  | 2,3,8, 10 | |
| X | WO-A-8 400 624 (JOHNSON SERVICE CO.)<br>* Abstract; page 32, lines 16-27 * | 1 | |
| A |  | 11 | TECHNICAL FIELDS SEARCHED (Int. Cl.4) |
| A | EP-A-0 121 147 (E.STEPHAN)<br>* Abstract; figures * | 11 | F 25 B<br>F 25 D<br>G 05 D |
| A | WO-A-8 500 064 (JOHNSON SERVICE CO°.) | | |

The present search report has been drawn up for all claims

| Place of search | Date of completion of the search | Examiner |
|---|---|---|
| THE HAGUE | 30-01-1987 | HELOT H.V. |